# EUROPEAN PATENT APPLICATION

(11) **EP 1 707 779 A2**
(43) Date of publication of application: **04.10.2006**
(21) Application number: 06111572.1
(22) Date of filing: 22.03.2006
(51) Int. Cl.: F02C 9/00, F02C 9/28

(54) **Failsafe electronic aircraft engine control system comprising overheat shutdown**

(30) Priority: 28.03.2005 US 92069
(71) Applicant: Honeywell International Inc., Morristown, New Jersey 07962 (US)
(72) Inventor: Horvath, Joseph M., Tuscon, AZ 85704 (US); Weir, Kenneth S., Tuscon, AZ 85737 (US); Milne, David L., Tuscon, AZ 85718 (US)
(74) Representative: Haley, Stephen

(57) **Abstract**

An aircraft engine control system (100) is configured to implement a failsafe shutdown of a jet engine in the highly unlikely occurrence of an overheat event. The system (100) includes an engine controller that includes a processor (202) and an enable circuit (206). The processor (202) is rated to operate up to a first temperature value (408), and is configured to perform a periodic computation and, upon completion thereof, to supply an output signal (214) representative of whether the periodic computation is completed successfully or unsuccessfully. The enable circuit (206) is rated to operate up to a second temperature value (412) that is greater than the first temperature value (408). The enable circuit (206) is coupled to receive the output signal (214) from the processor (202) and is operable, upon receipt thereof, to enable operability of the jet engine control component if the periodic computation is successfully completed, and disable operability of the jet engine control component if the periodic computation is unsuccessfully completed.

## Description

The present invention relates to a control system for an aircraft jet engine and, more particularly, to a system that provides a failsafe shutdown of the jet engine in the highly unlikely occurrence of an overheat event.

Typical gas turbine engine fuel supply systems include a fuel source, such as a fuel tank, and one or more pumps that draw fuel from the fuel tank and deliver pressurized fuel to the fuel manifolds in the engine combustor via a main supply line. The main supply line may include one or more valves in flow series between the pumps and the fuel manifolds. These valves generally include at least a main metering valve and a pressurizing-and-shutoff valve downstream of the main metering valve. In addition to the main supply line, many fuel supply systems may also include a bypass flow line connected upstream of the metering valve that bypasses a portion of the fuel flowing in the main supply line back to the inlet of the one or more pumps, via a bypass valve. The position of the bypass valve is controlled to maintain a substantially fixed differential pressure across the main metering valve.

Many aircraft include an engine controller, such as a FADEC (Full Authority Digital Engine Controller) to control engine operation and the fuel supply system. Typically, the engine controller receives various input signals from the engine and aircraft, and a thrust setting from the pilot. In response to these input signals, the engine control system may modulate the position of the fuel metering valve to control the fuel flow rate to the engine fuel manifolds to attain and/or maintain a desired thrust.

Fuel supply and engine control systems, such as the one described above, may experience certain postulated events that may result in certain postulated failure modes, which in turn may result in certain postulated effects. For example, one particular postulated event is an overheat event, which is postulated to occur as a result of, for example, a fire or ruptured bleed line. No matter what causes it, the postulated overheat event may cause the engine controller, or portions thereof, or one or more engine control system components, to degrade or otherwise become inoperable. Such degradation or inoperability may in turn cause undesirable engine behavior, such as an engine overspeed or engine overthrust.

To accommodate the above-described postulated event, the engine control system is typically designed such that, in the highly unlikely occurrence of an overheat event, the engine control system, or at least portions thereof, will predictably degrade or otherwise become inoperable. As a result, the engine will also shutdown predictably, thus significantly reducing the likelihood of an engine overspeed or engine overthrust event. Preferably, this predictable engine shutdown is implemented in a non-active manner so that it will not adversely impact inadvertent in-flight engine shutdown rate analyses.

Various schemes that have been implemented in the past to accommodate an overheat event include using various mechanical components, such as bimetallic strips or fusible wires, to remove power from the engine controller upon attainment of a particular temperature. Another scheme that has been implemented includes the use of a separate so-called failsafe circuit. This failsafe circuit includes a temperature sensitive circuit that is responsive to the controller temperature, and that consists of components rated at a substantially higher peak operating temperature than other components used in the engine controller. The failsafe circuit is configured to remove power from the engine controller when the temperature of the control system exceeds a predetermined value above which components in the engine controller are likely to become inoperable.

Although the various design schemes described above are generally safe, robust, and reliable, each suffers certain drawbacks. For example, each of the above-described schemes relies on the temperature sensing accuracy of one or more components, which may vary. Hence there is a need for a system and method of providing a predictable, non-active shutdown of an aircraft engine in the highly unlikely occurrence of an overheat event that does not rely on the use of one or more potentially inaccurate temperature sensors. The present invention addresses at least this need.

The present invention provides a system and method of providing a predictable, non-active shutdown of an aircraft engine in the highly unlikely occurrence of an overheat event.

In one embodiment, and by way of example only, a jet engine control system includes a processor and an analog enable circuit The processor is configured to receive one or more command signals and is operable, in response thereto, to supply one or more control signals for controlling a jet engine control component. The processor is further operable to conduct a periodic computation and, upon completion thereof, to supply an output signal representative of whether the periodic computation is completed successfully or unsuccessfully. The analog enable circuit is coupled to receive the output signal from the processor and is operable, upon receipt thereof, to enable operability of the jet engine control component if the periodic computation is successfully completed, and disable operability of the jet engine control component if the periodic computation is unsuccessfully completed.

In another exemplary embodiment, a control circuit for controlling a jet engine control system component includes a processor and an enable circuit. The processor is rated to operate up to a first temperature value, and is configured to perform a periodic computation and, upon completion thereof, to supply an output signal representative of whether the periodic computation is completed successfully or unsuccessfully. The enable circuit is rated to operate up to a second temperature value that is greater than the first temperature value. The enable circuit is coupled to receive the output signal from the processor and is operable, upon receipt thereof, to enable operability of the jet engine control component if the periodic computation is successfully completed, and disable operability of the jet engine control component if the periodic computation is unsuccessfully completed.

In yet another exemplary embodiment, a jet engine fuel supply system includes a fuel supply line, a fuel metering valve, a valve control device, and an engine controller. The fuel supply line has an inlet adapted to receive fuel from a fuel source, and an outlet adapted to supply the fuel to a gas turbine engine combustor. The fuel metering valve is disposed in flow-series in the fuel supply line, and has a variable area flow orifice through which fuel from the fuel source flows. The valve control device is coupled to the fuel metering valve, and is further coupled to receive valve commands and is operable, in response thereto, to adjust the area of the fuel metering valve variable area flow orifice. The engine controller is operable to supply the valve command signals, and includes a processor and an analog enable circuit. The processor is rated to operate up to a first temperature value, and is configured to supply the valve command signals, and to perform a periodic computation and, upon successful completion of the periodic computation, to supply an output signal. The analog enable circuit is rated to operate up to a second temperature value that is greater than the first temperature value, is coupled to receive the output signal from the processor, and is operable, upon receipt thereof, to enable operability of the valve actuator if the periodic computation is successfully completed and disable operability of the valve actuator if the periodic computation is unsuccessfully completed.

Other independent features and advantages of the preferred engine control system and method will become apparent from the following detailed description, taken in conjunction with the accompanying drawings which illustrate, by way of example, the principles of the invention.

### In the Drawings;

FIG. 1 is a block diagram of fuel delivery and control system for a gas turbine engine according to an exemplary embodiment of the present invention;

FIG. 2 is a functional block diagram of an exemplary controller used in the fuel delivery and control system depicted in FIG. 1;

FIG. 3 is a schematic diagram of an enable circuit that may be used in, or coupled to, the controller of FIG. 2; and

FIG. 4 is a graph depicting the behavior, with respect to temperature, of the controller and enable circuit shown in FIGS. 2 and 3, respectively.

The following detailed description of the invention is merely exemplary in nature and is not intended to limit the invention or the application and uses of the invention. Furthermore, there is no intention to be bound by any theory presented in the preceding background of the invention or the following detailed

### description of the invention.

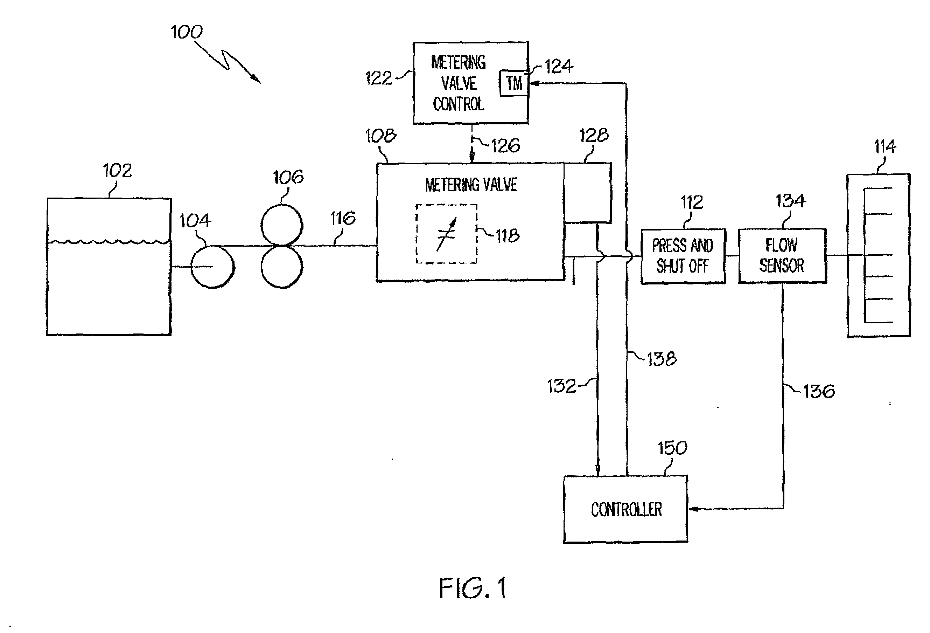

A simplified schematic diagram of one embodiment of a fuel delivery and control system for a gas turbine engine, such as a turbofan jet aircraft engine, is depicted in FIG.1. The system 100 includes a fuel source 102, one or more pumps 104, 106, a plurality of valves 108, 112, and an engine controller 150, The fuel source 102, which is preferably implemented as a tank, stores fuel that is to be supplied to a jet engine combustor 114. A supply line 116 is coupled to the fuel source 102 and, via the just-mentioned pumps 104, 106 and valves 108, 112, delivers the fuel to the combustor 114. It is noted that the supply line 116 is, for convenience, depicted and described with a single reference numeral. However, it will be appreciated that the system is implemented using separate sections of piping, though a single section is certainly not prohibited.

Each of the one or more pumps 104, 106 is positioned in flow-series in the supply line 116 and take a suction on the fuel source 102. In the depicted embodiment, two pumps are used and include a booster pump 104, such as a relatively low horsepower centrifugal pump, and a high pressure pump 106, such as a positive displacement pump. The booster pump 104 takes a suction directly on the fuel source 102 and provides sufficient suction head for the high pressure pump 106. The high pressure pump 106 then supplies the fuel, at a relatively high pressure, such as up to 1200 psig, to the remainder of the supply line 116.

A fuel metering valve 108 is positioned in flow-series in the supply line 116 downstream of the high pressure pump 106. The fuel metering valve 108 includes a variable area flow orifice 118 through which a portion of the fuel in the supply line 116 flows. A metering valve control device 122 is used to adjust the position of the metering valve 108, and thus the area of the variable area flow orifice 118. In the depicted embodiment, the metering valve 108 is a hydraulically-operated valve and the metering valve control device 122 is an electro-hydraulic servo valve (EHSV). The EHSV includes, for example, a torque motor 124 that receives valve command signals 138 from the engine controller 150 and, in response to the received valve command signals, moves to a position that, for example, is proportional to the current in the valve command signals. A non-illustrated jet pipe coupled to the torque motor 124 supplies a hydraulic metering valve control signal 126 to the metering valve 108. The valve control signal 126 is used to adjust the position of the metering valve 108 by controlling the flow of operational hydraulic fluid to the metering valve 108.

It will be appreciated that the metering valve 108 and the control device 122 described above are merely exemplary of a particular preferred embodiment, and that each may be implemented using other types of components. For example, the metering valve 108 could be an electrically operated valve. In this case, it may not utilize a control device 122 such as an EHSV, or the control device 122 could be implemented as an independent controller. In any case, fuel flow rate to the combustor 114 is, under normal circumstances, controlled by adjusting the position of the metering valve 108, and thus the area of the first variable area flow orifice 118, via the metering valve control device 122.

As FIG. 1 additionally shows, a position sensor 128 is preferably coupled to the metering valve 108, and is used to sense the metering valve's position and supply a valve position signal 132. The position of the metering valve 108 is directly related to the area of the variable area flow orifice 118, which is directly related to the fuel flow rate to the combustor 114. The position sensor 128 is preferably a dual channel linear variable differential trawfomer (LVDT), but could be any one of numerous position sensing devices known in the art. For example, the position sensor 128 could be a rotary variable differential transformer (RVDT), an optical sensor, a float-type sensor, etc.

In the depicted embodiment, two additional major components are positioned in flow-series in the supply line 116 between the metering valve 108 and the combustor 114. These two major components are a pressurizing and shutoff valve 112 and a flow sensor 134. The pressurizing-and-shutoff valve 112 functions to ensure a minimum system pressure magnitude is in the supply line 116 downstream of the metering valve 108, and shuts when the pressure falls below this minimum pressure magnitude. The flow sensor 134 measures the fuel flow rate to the combustor 114 and generates a flow signal 136 representative of the measured flow rate.

Although not depicted in FIG. 1, it will be appreciated that the system 100, in some embodiments additionally includes a bypass flow line. The bypass flow line, if included, is preferably connected to the supply line 116 between the high pressure pump 106 and the metering valve 108, and bypasses a portion of the fuel in the supply line 116 back to the inlet of the high pressure pump 106, the inlet of the booster pump 104, or back to the fuel source 102. To do so, the bypass line may include a bypass valve that is positioned to selectively bypass fuel flow in the supply line 116 away from the metering valve 108, and thus the engine combustor 114. Similar to the metering valve 108, the bypass valve is preferably controlled in response to valve command supplied from the engine controller 150, which will now be described in more detail.

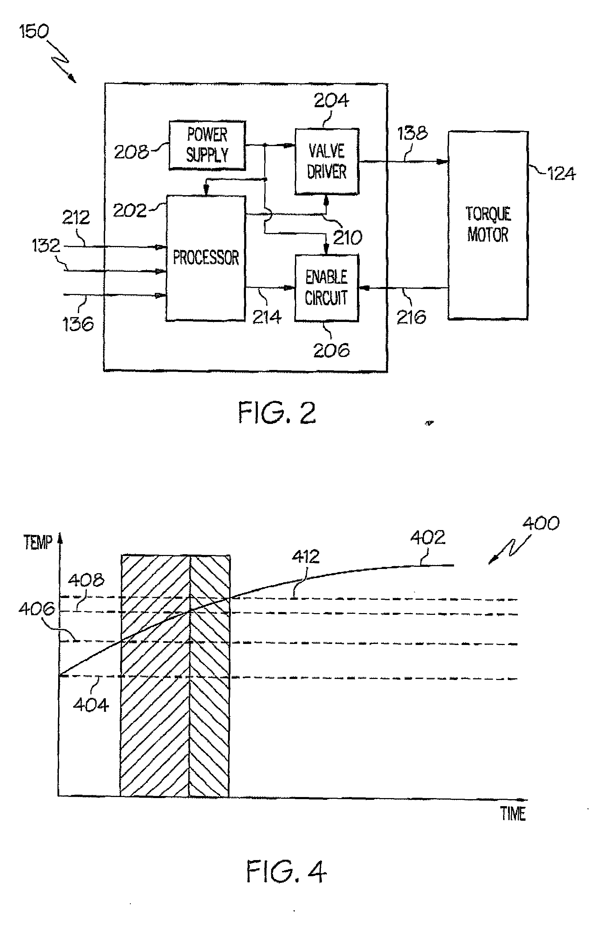

The engine controller 150, which may be, for example, a Full Authority Digital Engine Controller (FADEC), controls the overall operation of the aircraft engines, including the flow of fuel from the fuel source 102 to the combustors 114 in each engine. With respect to fuel supply to the combustors 114, the controller 150 receives various input signals and supplies the valve command signals 138 to the metering valve control device 122 to thereby control the fuel flow rate to the combustor 114. A more detailed discussion of the engine controller 150 and its functions will now be provided. In doing so, reference should now be made to FIG. 2, which depicts a portion of the engine controller 150 in block diagram form.

The engine controller 150 includes, among other components, a processor 202, a valve driver circuit 204, an enable circuit 206, and one or more power supply circuits 208 (for clarity, only one shown). In the depicted embodiment, the processor 202 receives an input control signal 212 from throttle control equipment (not illustrated) in the cockpit, the position signal 132 from the position sensor 128, and the flow signal 136 from the flow sensor 134. The processor 202, in response to one or more of these signals, is configured to supply control signals 210 to the valve driver circuit 204. The processor 202 is additionally configured to conduct a periodic computation and, upon completion of the computation, supply an output signal 214 representative of whether the periodic computation was completed successfully or unsuccessfully. In the depicted embodiment processor 202 is configured such that the output signal 214, when the periodic computation is completed successfully, is a fixed-frequency square wave. It will be appreciated, however, that this is merely exemplary and that the output signal 214 could be implemented as any one of numerous alternative forms to indicate successful completion of the periodic computation. For example, the output signal 214 could instead be implemented to have a specific or minimum pulse width, a specific or minimum duty cycle, or be within a range of frequencies, just to name a few. Moreover, although the controller 150 is depicted and described herein as including only a single processor 202, it will be appreciated that this is done for convenience only and that the controller 150 may be implemented with a plurality of redundant processors 202.

The valve driver circuit 204 receives the control signals 210 supplied from the processor 202 and, in response to the control signals 210, supplies the valve command signals 138 to the metering valve control device 122. In the depicted embodiment, the metering valve control device 122 includes the torque motor 124; thus, the valve driver circuit 204 is implemented as a torque motor driver circuit. The valve command signals 138, as was noted above, cause the metering valve control device 122 to adjust the area of the metering valve variable area flow orifice 118, and thus fuel flow rate to the engine combustor 114.

The enable circuit 206 is coupled to both the processor 202 and the metering valve control device 122. More particularly, in the depicted embodiment, the enable circuit 206 is coupled to receive the output signal 214 supplied from the processor 202 and is additionally coupled in the electrical power return path 216 of the torque motor 124. The enable circuit 206, which is described in greater detail below, is responsive to the output signal 214 to either enable or disable the torque motor electrical power return path 216. More specifically, if the output signal 214 indicates that the processor 202 is successfully completing the periodic computation, then the enable circuit 206 enables the torque motor electrical power return path 216. With the torque motor electrical power return path 216 enabled, the torque motor 124 can be energized and respond to the valve command signals 138 supplied from the valve driver circuit 204. Conversely, if the output signal 214 indicates that the processor 202 is not successfully completing the periodic computation, then the torque motor power return path 216 is disabled. As a result, the torque motor 124 cannot be energized and thus cannot respond to the valve command signals 138 supplied from the valve driver circuit 204.

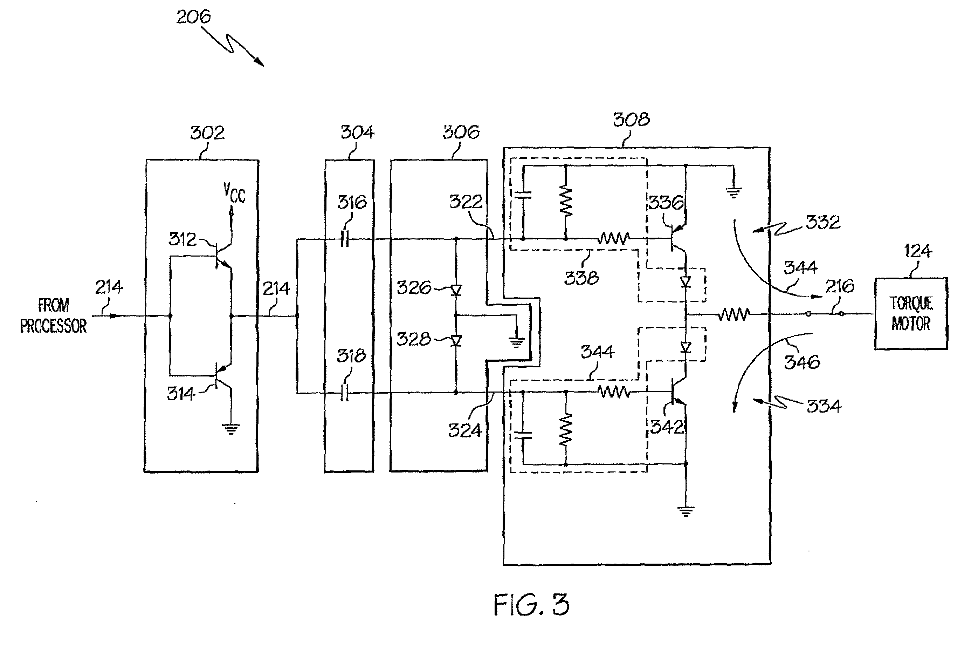

Before proceeding further, it is noted that the processor 202, the valve driver circuit 204, the power supply circuits 208, and various other electrical circuits, sub-circuits, electrical components, and interconnecting wiring, are rated to operate up to, at most, a first rated temperature. The specific rated temperature up to which the processor 202, the valve driver circuit 204, the power supply circuits 208, the various circuits, sub-circuits, components, and interconnecting wiring will operate may vary, but in the depicted embodiment, the maximum rated temperature, or first rated temperature, is about 110-125°C.Conversely, the enable circuit 206 is rated to operate up to a second rated temperature that is greater than the first rated temperature. Again, although the specific value of the second rated temperature may vary, in a particular preferred embodiment it is at least about 200 °C. A schematic diagram of the enable circuit 206 is shown in FIG. 3, and will now be described in more detail.

As FIG. 3 shows, the enable circuit 206 is preferably implemented as an analog circuit, and includes a buffer circuit 302, a capacitance coupling circuit 304, a rectification circuit 306, and a controllable switch circuit 308. The buffer circuit 302 is coupled to receive the output signal 214 from the processor 202 and supply a substantially identical signal 214 to the capacitance coupling circuit 304. The buffer circuit 302, which includes a first NPN bipolar transistor 312 and a first PNP bipolar transistor 314, among other things, isolates the low output impedance of the processor 202 from the remainder of enable circuit 206 to minimize the load on the processor 202.

The capacitance circuit 304 capacitively couples the buffer circuit 302 to the rectification circuit 306. The capacitance circuit 304 includes two substantially identical capacitance circuit elements, a first capacitor 316 and a second capacitor 318, which are each electrically coupled to different input terminals of the rectification circuit 306. As is generally known, capacitance circuit elements exhibit relatively low impedance to AC signals and very high impedance to DC signals. Thus, as long as the processor output signal 214 is a square wave signal, the capacitance circuit 304 will pass the output signal 214 to the rectification circuit 306. However, if the processor 202 is unable to successfully complete the periodic computation due, for example, to the processor 202 becoming overheated, the processor output signal 214 will no longer be a square wave. Rather, the output signal 214 may instead be a positive or negative DC signal, or it may cease altogether. In such an instance, the output signal 214 would not be supplied to the rectification circuit 306. As will be described further below, and as was alluded to above, if the processor 202 is not supplying a square wave as the output signal 214, indicating that the processor 202 is unable to successfully complete the periodic computation, the remainder of enable circuit 206 will prevent the torque motor 124 from being energized.

The rectification circuit 306, as was noted above, receives the output signal 214 from the capacitance circuit 304. In response, the rectification circuit 306 rectifies the output signal 214 and supplies two switch control signals 322, 324 to the controllable switch circuit 308. The rectification circuit 306 includes two rectifier circuits, a first rectifier circuit 326 and a second rectifier circuit 328, each of which, in at least the depicted embodiment, consist of a single diode. The first and second rectifier circuits 326, 328 are electrically coupled within the enable circuit 206 such that when the fixed-frequency square wave output signal 214 is of a relatively positive edge-polarity, the first rectifier circuit 326 conducts and the second rectifier circuit 328 does not. As a result, one of the switch control signals 322 is limited to the value of a diode voltage drop (e.g., about 0.6 VDC), while the other switch control signal 324 is a relatively positive DC switch control signal. Conversely, when the fixed-frequency square wave output signal 214 is of a relatively negative edge-polarity, the second rectifier circuit 328 conducts and the first rectifier circuit 326 does not. Thus, one of the switch control signals 324 is limited to the value of a diode voltage drop, and the other switch control signal 322 is a relatively negative switch control signal.

The controllable switch circuit 308 is coupled to receive the switch control signals 322, 324 from the rectification circuit 306 and, in response, selectively enables or disables the torque motor electrical power return path 216. To implement this functionality, the controllable switch circuit 308 includes two controllable switches, a first controllable switch 332 and a second controllable switch 334. The first controllable switch 332 is coupled to receive, and is responsive to, the switch control signal 322 supplied from the first rectifier circuit 326, and the second controllable switch 334 is coupled to receive, and is responsive to, the switch control signal 324 supplied from the second rectifier circuit 328. More specifically, whenever the first 332 or second 334 controllable switch receives a control signal 322 or 324, respectively, it will close, or conduct, and thus complete, or enable, the torque motor electrical power return path 216. Conversely, whenever the first 332 or second 334 controllable switch does not receive a control signal 322 or 324, respectively, it will open, or not conduct, and thus electrically open, or disable, the torque motor electrical power return path 216.

Although the first and second controllable switches 332, 334 could be implemented using any one of numerous circuit components, and in any one of numerous configurations, in the depicted embodiment, each is implemented as a transistor circuit. More specifically, the first transistor circuit 332 is implemented as a PNP bipolar transistor circuit, which includes a gallium-arsenide (GaAs) PNP bipolar transistor 336 and associated biasing, filtering, and current steering circuitry 338, and the second transistor circuit 334 is implemented as an NPN bipolar transistor circuit, which includes a GaAs NPN bipolar transistor 342 and associated biasing, filtering, and current steering circuitry 344. The biasing, filtering, and current steering circuitry 338, 344 are each configured such that the control signal 214 must be of at least a predetermined minimum frequency to overcome the discharge filter characteristics of these circuits 338, 344. It will be appreciated that the transistors 336, 342 could be implemented using other types of transistors including, for example, any one of numerous types of bipolar, FETs, MOSFETs, or IGBTs. However, no matter the specific type of transistor that is used, the transistors are each preferably rated to operate up to at least the second rated temperature, which in the depicted embodiment is at least 200 °C.

The first and second transistor circuits 332, 334 are electrically coupled within the enable circuit 206 such that when it receives the relatively negative DC switch control signal 322, the PNP transistor 336 is forward biased and conducts, thereby completing, or enabling, the torque motor electrical power return path 216, and allowing current to flow through the torque motor 124 in a first direction 345. Conversely, when the second rectifier circuit 328 receives the relatively positive DC switch control signal 324, the NPN transistor 342 is forward biased and conducts, thereby completing, or enabling, the torque motor electrical power return path 216, and allow current to flow through the torque motor 124 in a second direction 346, opposite the first direction.

With the above-described circuit configuration, in the highly unlikely occurrence of an overheat event, the enable circuit 206 is configured such that it will continue operating properly well after other active circuits coupled within or to the engine controller 150 degrade or become otherwise inoperable. Thus, should a highly unlikely overheat event occur, the enable circuit 206 will not adversely impact overall fuel delivery and control system 100 operation. To illustrate this, a graph 400 of time versus temperature following a postulated overheat event is provided in FIG. 4, and will now be described.

As the graph 400 in FIG, 4 shows, when the postulated overheat event occurs, controller temperature 402 begins rising above the normal operating temperature 404. As the overheat event continues, it eventually reaches a temperature value 406 at which various active circuits within the controller 150 begin to become inoperable. As controller temperature 402 continues its increase, the first rated temperature value 408 is reached, at which point at least the processor 202, the valve driver circuit 204, and the power supply circuit 208 are fully inoperable. However, the enable circuit 206, which is rated to operate up to at least the second rated temperature value 412, continues operating properly. Thus, as long as the processor 202, the valve driver 204, and the power supplies 208 continue operating properly, the engine controller 150 can continue controlling fuel flow rate to the combustors 114. Indeed, following initiation of the overheat event, and for some time thereafter, it is likely that the processor 202, the valve driver 204, and the power supplies 208 will continue operating properly, and the processor will thus continue to supply the fixed-frequency square wave output signal 214. This ensures the longest possible time to maintain positive control of the engine during the highly unlikely, yet postulated, overheat event.

Nonetheless, as controller temperature 402 continues to rise, the processor 202 will at some point attain the first rated temperature 408, at which time it will no longer successfully complete the periodic computation and will no longer supply the fixed-frequency square wave output signal 214. As FIG. 4 shows, if controller temperature 402 continues to rise and reaches the second rated temperature value 412, the enable circuit 206 will become inoperable. However, by this time the other active circuits within the engine controller 150 have already become inoperable, and placed the system 100, and more specifically the engine controller outputs to the torque motor 124, in a failsafe condition.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof Therefore, it is intended that the invention not be limited to the particular embodiment disclosed as the best mode contemplated for carrying out this invention, but that the invention will include all embodiments falling within the scope of the appended claims.

## Claims

1. A jet engine control system (100), comprising:
a processor (202) configured to receive one or more command signals (212) and operable, in response thereto, to supply one or more control signals (210) for controlling a jet engine control component, the processor (202) further operable to conduct a periodic computation and, upon completion thereof, to supply an output signal (214) representative of whether the periodic computation is completed successfully or unsuccessfully; and
an analog enable circuit (206) coupled to receive the output signal (214) from the processor (202) and operable, upon receipt thereof, to (i) enable operability of the jet engine control component if the periodic computation is successfully completed and (ii) disable operability of the jet engine control component if the periodic computation is unsuccessfully completed.

2. The system (100) of Claim 1, wherein:
the processor (202) is rated to operate up to a first temperature value (408); and
the analog enable circuit (206) is rated to operate at up to a second temperature value (412) that is greater than the first temperature value (408).

3. The system (100) of Claim 1, wherein the analog enable circuit (206) comprises:
a first controllable switch (332) responsive to the output signal (214) to selectively switch between an open position and a closed position to thereby enable and disable, respectively, current flow through the jet engine control component in a first direction (345); and
a second controllable switch (334) responsive to the output signal (214) to selectively switch between an open position and a closed position to thereby enable and disable, respectively, current flow through the jet engine control component in a second direction.

4. The system (100) of Claim 3, wherein the first and second controllable switches (332, 334) comprise first and second transistor circuits, respectively, that selectively switch between a non-conductive state, which corresponds to the open position, and a conductive state, which corresponds to the closed position.

5. The system (100) of Claim 4, wherein:
the first transistor circuit is implemented as a PNP transistor circuit; and
the second transistor circuit is implemented as an NPN transistor circuit.

6. The system (100) of Claim 5, wherein each transistor circuit comprises one or more transistors rated to operate at up to at least 200°C.

7. The system (100) of Claim 4, wherein the output signal (214) supplied by the processor (202) is a substantially fixed-frequency square wave signal if the periodic computation is completed successfully.

8. The system (100) of Claim 7, wherein the analog enable circuit (206) further comprises:
first and second rectifier (326, 328) circuits coupled to receive the fixed-frequency square wave signal and operable, upon receipt thereof, to supply rectified first and second direct current (DC) control signals to the first and second transistor circuits, respectively.

9. The system (100) of Claim 8, wherein the analog enable circuit (206) further comprises:
first and second capacitance circuit elements (316, 318) coupled between the first and second rectifier circuits (326, 328), respectively, and the processor (202).

10. The system (100) of Claim 3, wherein the analog enable circuit (206) further comprises:
a buffer circuit (302) coupled between the processor (202) and the first and second controllable switches.
